# EUROPEAN PATENT APPLICATION

(11) **EP 4 283 771 A1**
(43) Date of publication of application: **29.11.2023**
(21) Application number: 22742266.4
(22) Date of filing: 21.01.2022
(51) Int. Cl.: H01M 50/30, H01M 50/20, H01M 50/10

(54) **BATTERY PACK, METHOD FOR MANUFACTURING BATTERY PACK, AND ELECTRIC DEVICE**

(30) Priority: 21.01.2021 CN 202110082287
(71) Applicant: DONGGUAN POWERAMP TECHNOLOGY LIMITED, Dongguan, Guangdong 523000 (CN)
(72) Inventor: YUAN, Hongwei, Dongguan, Guangdong 523000 (CN); TONG, Yanchen, Dongguan, Guangdong 523000 (CN); WANG, Shenbo, Dongguan, Guangdong 523000 (CN)
(74) Representative: Icosa
(86) International application number: PCT/CN2022/073318
(87) International publication number: WO 2022/156787

(57) **Abstract**

A battery pack is disclosed, including a cover plate, a cell module, a second resin layer, and a battery pack housing. The cell module is accommodated in the battery pack housing and fixed by the second resin layer. The cover plate is fixed to the battery pack housing. The cell module includes a plurality of cells. The plurality of cells are stacked along a second direction. Each of the cells includes a first end and a second end disposed opposite to each other along a first direction. The cell close to the cover plate is a first cell. The battery pack further includes an insulation assembly. The insulation assembly is disposed at second ends of at least two of the cells. The insulation assembly and the second ends of the at least two cells form a first space. The first space communicates with a clearance between the at least two cells. The insulation assembly closes off one side of the first space, and the one side of the first space facing away from the cells along a direction opposite to the first direction. The insulation assembly and the first space form an exhaust passage. The exhaust passage communicates with an outside of the battery pack. This application further relates to a method for manufacturing a battery pack and an electrical device. The safety performance of the electrical device is improved by using the battery pack.

## Description

This application claims priority to Chinese Patent Application No. 202110082287.7 filed on January 21, 2021.

### TECHNICAL FIELD

This application relates to the technical field of battery manufacturing, and in particular, to a battery pack, a method for manufacturing a battery pack, and an electrical device.

### BACKGROUND

When an existing pouch-type lithium battery is in normal use for a long time or abnormal, a cell in the battery generates a gas and expands in volume. When the expansion of the cell reaches a specified degree, the cell may explode. If the expansion of the cell is not controlled in time, a series of safety hazards may occur during the use of the battery.

### SUMMARY

In view of this, it is necessary to provide a battery pack and an electrical device to alleviate expansion of the battery and enhance safety of the battery in use.

An embodiment of this application provides a battery pack, including a cover plate, a cell module, a second resin layer, and a battery pack housing. The cell module is accommodated in the battery pack housing and fixed by the second resin layer. The cover plate is fixed to the battery pack housing. The cell module includes a plurality of cells. The plurality of cells are stacked along a second direction. Each cell includes a first end and a second end disposed opposite to each other along a first direction. The cell close to the cover plate is a first cell. The first direction is perpendicular to the second direction. The battery pack further includes an insulation assembly. The insulation assembly is disposed at second ends of at least two of the cells. The insulation assembly and the second ends of the at least two cells form a first space. The first space communicates with a clearance between the at least two cells. The insulation assembly closes off one side of the first space, and the one side of the first space facing away from the cells along a direction opposite to the first direction. The insulation assembly and the first space form an exhaust passage. The exhaust passage communicates with an outside of the battery pack.

By disposing the insulation assembly, on the one hand, the second end of the cell is caused to be easily movable, and in turn, the accuracy of detecting the expansion degree of the cell module is improved; and, on the other hand, the dosage of the second resin layer is reduced, and in turn, the cost of the battery pack is reduced.

In a possible implementation, the battery pack includes a first resin layer. The first resin layer is disposed at the second ends of the at least two cells. The first resin layer is bonded to the insulation assembly and the second ends of the at least two cells.

With the first resin layer disposed in the battery pack, the dosage of the second resin layer can be reduced, thereby reducing the cost of the battery pack while fixing the cell module.

In a possible implementation, the insulation assembly includes a second insulator and a third insulator. The second insulator is disposed at the second ends of at least two cells. The second insulator includes a third through-hole. The third through-hole communicates with a clearance between the at least two cells. The third insulator closes off one side of the third through-hole, and the one side of the third through-hole facing away from the cells along the direction opposite to the first direction.

Such a battery pack can further reduce the dosage of the second resin layer, and reduce the cost of the battery pack.

In a possible implementation, viewed along the first direction, the second insulator covers the first resin layer. A bonding structure is disposed on a surface of the second insulator, the surface being close to the first resin layer. The second insulator is bonded to the cells by the bonding structure.

Such a battery pack enables bonding of the second insulator to the cell through the bonding structure.

In a possible implementation, the second insulator is bonded to the second ends of the cells. The first resin layer is disposed at an edge of the third through-hole.

Such a battery pack can reduce the dosage of the first resin layer, and reduce the cost of the battery pack.

In a possible implementation, the battery pack includes a first insulator. The first insulator is disposed between the at least two cells. On the first insulator, an opening is provided at a position close to the second end of the cell. The opening communicates with the first space.

On such a battery pack, the disposed first insulator provides a deformation space for the cell, thereby alleviating the direct mutual squeezing between two adjacent cells or the mutual squeezing between the cell and the cover plate or the battery pack housing, and preventing the resultant rupture of the cover plate or the battery pack housing. Gas can be exhausted by creating the opening that communicates with the first space.

In a possible implementation, the second insulator includes a first body. The third through-hole is provided in the first body.

In such a battery pack, the third through-hole is created in the first body. The third through-hole can communicate with the clearance between each of the plurality of cells and the first insulator to exhaust gas.

In a possible implementation, the cover plate includes a first through-hole. The second insulator further includes a first portion. At least a part of the first portion is located in the first through-hole.

In such a battery pack, the first through-hole is provided so that a part of the structure of the cell module can protrude from the first through-hole, and then be connected to an external structure (such as a circuit board) disposed on the cover plate. At least a part of the first portion is located in the first through-hole, thereby implementing connection between the second insulator and the external structure.

In a possible implementation, the first portion extends beyond the cover plate through the first through-hole.

In such a battery pack, the first portion extends beyond the cover plate through the first through-hole, thereby facilitating connection between the second insulator and an external structure.

In a possible implementation, the third insulator includes an exhaust slot. The exhaust slot communicates with the third through-hole.

In such a battery pack, an exhaust passage is formed by creating an exhaust slot and making the exhaust slot communicate with the second through-hole, so that the gas inside the battery pack can be exhausted through the exhaust slot.

In a possible implementation, the third insulator includes a second body and a second portion. The second body closes the third through-hole. The second portion is connected to the first portion. At least a part of the second portion is located in the first through-hole.

In such a battery pack, the second portion serves a function of supporting and fixing the first portion. At least a part of the second portion is located in the first through-hole, thereby implementing connection between the third insulator and an external structure.

In a possible implementation, the second portion extends beyond the cover plate through the first through-hole.

In such a battery pack, the second portion extends beyond the cover plate through the first through-hole, thereby facilitating connection between the third insulator and an external structure.

In a possible implementation, the third insulator includes a second bonding region. The second bonding region includes a bonding structure. The third insulator is adhesively connected to the second insulator by the bonding structure.

With the bonding region disposed in such a battery pack, the second insulator may be connected to the third insulator by the bonding structure in the bonding region.

In a possible implementation, the second insulator and the third insulator are onepiece formed structure. An exhaust slot is provided. The exhaust slot communicates with the third through-hole.

In such a battery pack, the second insulator and the third insulator are formed in one piece, and can be manufactured by molding, thereby reducing the processing difficulty. The second insulator and the third insulator may be one-piece formed structures. The exhaust slot is provided and caused to communicate with the third through-hole to form an exhaust passage. The gas inside the battery pack can be exhausted through the exhaust slot. In a possible implementation, the first insulator includes foam.

In such a battery pack, the foam provides a deformation space for the cell, thereby alleviating the direct mutual squeezing between two adjacent cells or the mutual squeezing between the cell and the cover plate or the battery pack housing, and preventing the resultant rupture of the cover plate or the battery pack housing.

In a possible implementation, a second through-hole is provided in the first insulator. The second through-hole provides an expansion space for the cells.

In such a battery pack, with the second through-hole provided in the first insulator, the dosage of the first insulator is reduced, and the amount of generated gas is also reduced.

In a possible implementation, each of the cells includes an electrode assembly, a cell housing, and a metal portion. The electrode assembly is accommodated in the cell housing. The metal portion is connected to the electrode assembly and extends out of the cell housing. Viewed in a direction opposite to the second direction, a projected area of the first insulator on the cell is greater than or equal to a projected area of the electrode assembly.

In such a battery pack, by setting the dimensions of the first insulator in such a way, the probability of inability to compress the first insulator is reduced when the second resin layer enters the clearance between two adjacent cells from a lateral edge of the cell in a process of filling the stacked cells with the second resin layer.

In a possible implementation, viewed along a direction opposite to the second direction, the projected area of the first insulator on the cell is less than or equal to a projected area of the cell housing.

By setting the dimensions of the first insulator in this way on the battery pack, it is easier to fit the cell module into the battery pack housing, thereby reducing the probability of difficult assembling.

In a possible implementation, the second resin layer includes a potting glue. The second resin layer adhesively fixes the cell module and the battery pack housing together.

In such a battery pack, the second resin layer is a potting glue. The potting glue exerts effects such as bonding, sealing, potting, and coating protection for components.

In a possible implementation, the first resin layer is formed by applying and fixing a liquid resin onto the second ends of the cells.

The first resin layer of such a battery pack is in a liquid state, thereby facilitating arrangement based on actual conditions.

In a possible implementation, a clearance exists between the first insulator and the second end of the cell.

Such a battery pack allows the gas to pass through the clearance between the first insulator and the cell, thereby facilitating the first insulator to exhaust the gas for the cell.

In a possible implementation, at least a part of the insulation assembly is disposed on the second resin layer.

The insulation assembly in such a battery pack can be connected to the cell module through the second resin layer.

A method for manufacturing a battery pack, including the following steps:
disposing a plurality of cells in a battery pack housing, and disposing a first insulator between at least two of the cells, where a clearance exists between the at least two cells;
disposing an insulation assembly at second ends of the at least two cells, where the insulation assembly and the second ends of the at least two cells form a first space, and the first space communicates with the clearance between the at least two cells; and
the insulation assembly closes off one side of the first space, the one side of the first space facing away from the cells along a direction opposite to the first direction, the insulation assembly and the first space form an exhaust passage, and the exhaust passage communicates with an outside of the battery pack; and
pouring a second resin layer into the battery pack housing after the insulation assembly is disposed.

By applying the method for manufacturing a battery pack, the battery pack can be manufactured. With the battery pack, on the one hand, the second end of the cell is caused to be easily movable, and in turn, the accuracy of detecting the expansion degree of the cell module is improved; and, on the other hand, the dosage of the second resin layer is reduced, and in turn, and the cost of the battery pack is reduced.

In a possible implementation, the second resin layer is applied by potting or injection molding.

In such a method for manufacturing the battery pack, the second resin layer is applied by potting or injection molding, thereby simplifying the operation.

An electrical device is disclosed, including a body and the battery pack according to any one of the implementations described above. The battery pack is disposed in the body.

The safety performance of the electrical device can be improved by using the battery pack.

### BRIEF DESCRIPTION OF DRAWINGS

FIG. 1 is a three-dimensional schematic structural diagram of a battery pack according to an embodiment of this application;
FIG. 2 is a schematic exploded view of a battery pack shown in FIG. 1;
FIG. 3 is a three-dimensional schematic structural diagram of a cover plate shown in FIG. 2 as viewed from another viewing angle;
FIG. 4 is a schematic exploded view of a cell module in a battery pack shown in FIG. 2;
FIG. 5 is a schematic exploded view of a cell module shown in FIG. 2 according to another embodiment;
FIG. 6 is a schematic exploded view of a cell module in a battery pack according to another embodiment of this application;
FIG. 7 is a three-dimensional schematic structural diagram of a cell in a cell module shown in FIG. 4;
FIG. 8 is a schematic exploded view of a cell shown in FIG. 7;
FIG. 9 is a three-dimensional schematic structural diagram of a bracket in a battery pack shown in FIG. 4 as viewed from another viewing angle;
FIG. 10 is a three-dimensional schematic structural diagram of a bracket in a battery pack as viewed from another viewing angle according to another embodiment of this application;
FIG. 11 is a schematic cross-sectional view of a battery pack shown in FIG. 1 sectioned along an M-M line after a cover body is removed;
FIG. 12 is a schematic exploded view of a detection piece in a cell module shown in FIG. 4;
FIG. 13 is a schematic exploded view of a battery pack according to another embodiment of this application;
FIG. 14 is a three-dimensional schematic structural diagram of a first insulator shown in FIG. 5;
FIG. 15 is a schematic top view of connecting a first insulator shown in FIG. 14 to a cell;
FIG. 16 is a schematic side view of stacking a first exhaust piece shown in FIG. 14 and cells together;
FIG. 17 is a schematic diagram of a first resin layer disposed on a stack of cells and a first exhaust piece shown in FIG. 16;
FIG. 18 is a three-dimensional schematic structural diagram of a second insulator shown in FIG. 5;
FIG. 19 is a three-dimensional schematic structural diagram of a third insulator shown in FIG. 5;
FIG. 20 is a schematic cross-sectional view of a cell module in a battery pack shown in FIG. 2, where the cell module is sectioned along an N-N line;
FIG. 21 is a schematic top view of connecting a first exhaust piece to a cell according to another embodiment of this application; and
FIG. 22 is a schematic exploded view of a cell module in a battery pack according to still another embodiment of this application.

List of reference numerals: Battery pack 100 Cover plate 10 Plate body 11 Protruding portion 12 Avoidance port 13 First through-hole 14 Cell module 20 Cell 21 First cell M First face O Second face P Electrode assembly 211 Cell housing 212 Accommodation portion 2121 Metal portion 213 First end A Second end B First surface 214 Second surface 215 Bracket 22 Main body 221 Protruding portion 222 Groove 223 Fixing portion 224 Fixing hole 225 Detection piece 23 First detection portion 231 Second detection portion 232 First bonding region 233 Lead wire 234 Supporting portion 235 Connecting portion236 Supporting piece 24 Adapter assembly 25 Adapter plate 251 Adapter piece 252 Position limiter 253 Insulation assembly 26 First insulator 261 Second through-hole 2611 Opening 2612 First resin layer 262 Second insulator 263 First body 2631 Third through-hole 2632 First portion 2633 Third insulator264 Second body 2641 Second portion 2642 Exhaust slot 2643 Second bonding region 2644 Buffer 27 Rubber pad 28 Circuit board 29 Second resin layer 30 Battery pack housing 40 Sidewall 41 Bottom wall 42 Accommodation space 43 First space 265

### DETAILED DESCRIPTION OF EMBODIMENTS

The following describes the technical solutions in some embodiments of this application with reference to the drawings hereof. Evidently, the described some embodiments are merely a part of but not all of some embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component. The terms such as "top", "bottom", "up", "down", "left", "right", "front", and "back" and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific some embodiments but not to limit this application.

An embodiment of this application provides a battery pack, including a cover plate, a cell module, a second resin layer, and a battery pack housing. The cell module is accommodated in the battery pack housing and fixed by the second resin layer. The cover plate is fixed to the battery pack housing. The cell module includes a plurality of cells. The plurality of cells are stacked along a second direction. Each of the cells includes a first end and a second end disposed opposite to each other along a first direction. The cell close to the cover plate is a first cell. The first direction is perpendicular to the second direction. The battery pack further includes an insulation assembly. The insulation assembly is disposed at second ends of at least two of the cells. The insulation assembly and the second ends of the at least two cells form a first space. The first space communicates with a clearance between the at least two cells. The insulation assembly closes off one side of the first space, and the one side of the first space facing away from the cells along a direction opposite to the first direction. The insulation assembly and the first space form an exhaust passage. The exhaust passage communicates with an outside of the battery pack.

The following describes some embodiments in detail with reference to drawings. To the extent that no conflict occurs, the following some embodiments and the features in some embodiments may be combined with each other.

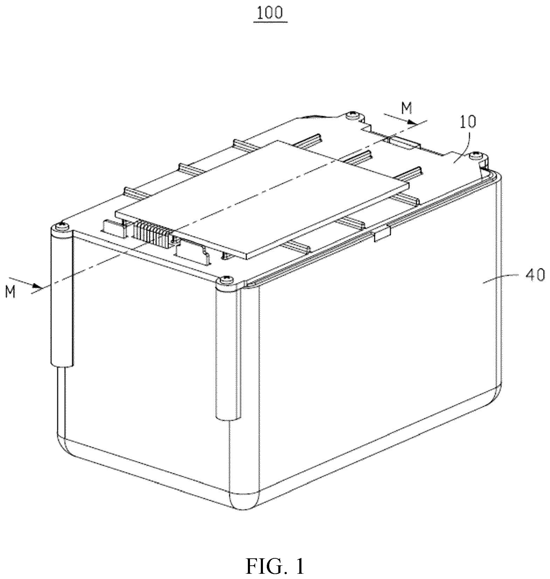

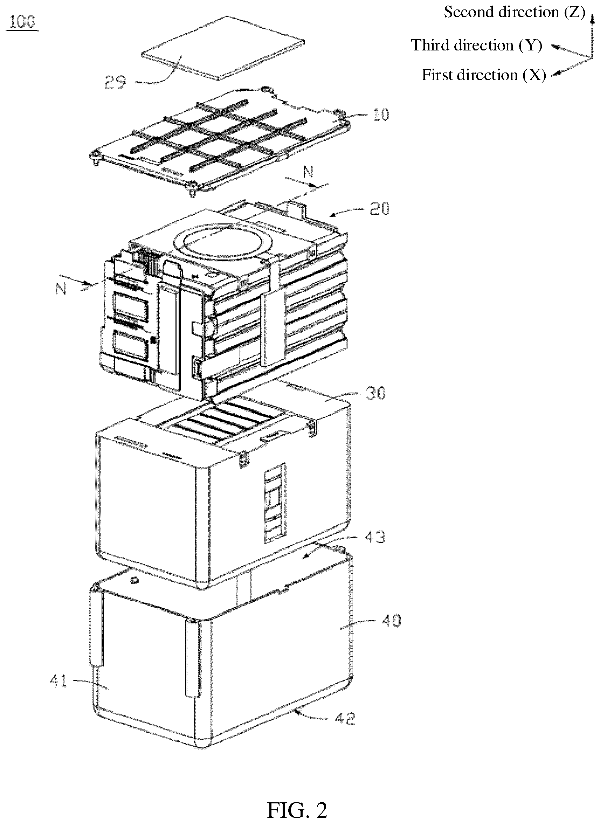

Referring to FIG. 1 and FIG. 2, an embodiment of this application provides a battery pack 100, including a cover plate 10, a cell module 20, a second resin layer 30, and a battery pack housing 40. The cell module 20 and the second resin layer 30 are disposed in the battery pack housing 40. The second resin layer 30 fixes the cell module 20 into the battery pack housing 40. The cover plate 10 is fixed to the battery pack housing 40 by a fastener such as a screw, and is configured to work together with the battery pack housing 40 to enclose the cell module 20 to protect the cell module 20. In an embodiment, the second resin layer 30 is formed by injecting and fixing resin into the battery pack housing 40. In another embodiment, the second resin layer 30 includes a potting glue.

In order to describe the structure of the battery pack 100 more clearly, the structure of the battery pack 100 will be described by using X, Y, and Z coordinate axes. The X-axis, the Y-axis, and Z-axis are perpendicular to each other.

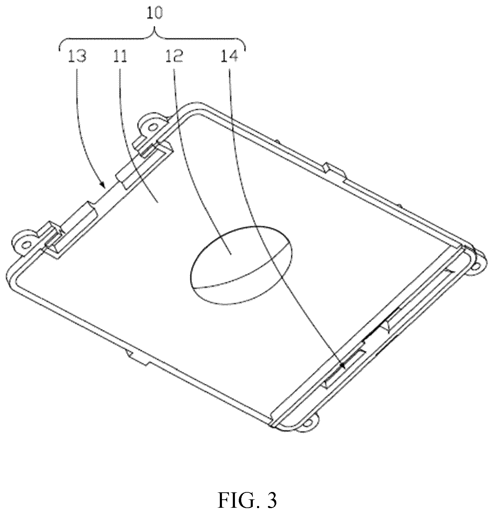

Referring to FIG. 2 and FIG. 3, the cover plate 10 is disposed on the battery pack housing 40 along the Z-axis direction. Specifically, the battery pack housing 40 and the cover plate 10 are disposed in sequence along the Z-axis direction. The cover plate 10 includes a plate body 11. The plate body 11 is roughly rectangular. When the cover plate 10 is disposed on the battery pack housing 40, the plate body 11 is disposed on an upper surface of the cell module 20.

In an embodiment, the cover plate 10 further includes a raised portion 12. The raised portion 12 is disposed on a side of the plate body 11, the side being close to the cell module 20, so that the cover plate 10 can be in better contact with the cell module 20 through the raised portion 12.

In an embodiment, the cover plate 10 further includes an avoidance port 13. A part of the structure of the cell module 20 can extend out of the battery pack housing 40 from the avoidance port 13 so as to be exposed between the cover plate 10 and the battery pack housing 40. In this way, the cell module 20 can communicate with the external environment, and make it convenient to expel the gas generated by the cell module 20.

In an embodiment, the cover plate 10 further includes a first through-hole 14. Along the first direction, the first through-hole 14 and the avoidance port 13 are disposed at two opposite ends of the plate body 11 respectively. Through the first through-hole 14 created, a part of the structure of the cell module 20 can protrude from the first through-hole 14, and then be connected to an external structure (such as a circuit board) disposed on the cover plate 10. In this embodiment, the first direction is the X-axis direction.

Understandably, in other embodiments, the shape of the plate body 11 is not limited to the example. In a battery pack 100 of a different shape, the shape of the plate body 11 may vary depending on the battery pack 100.

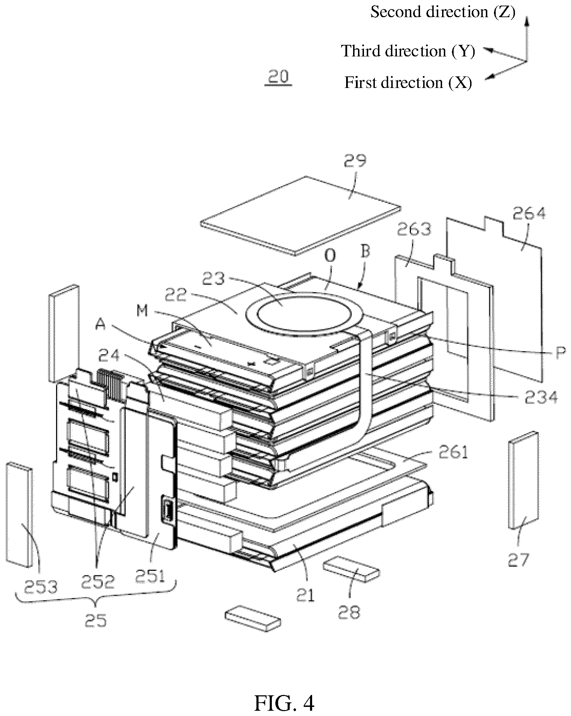

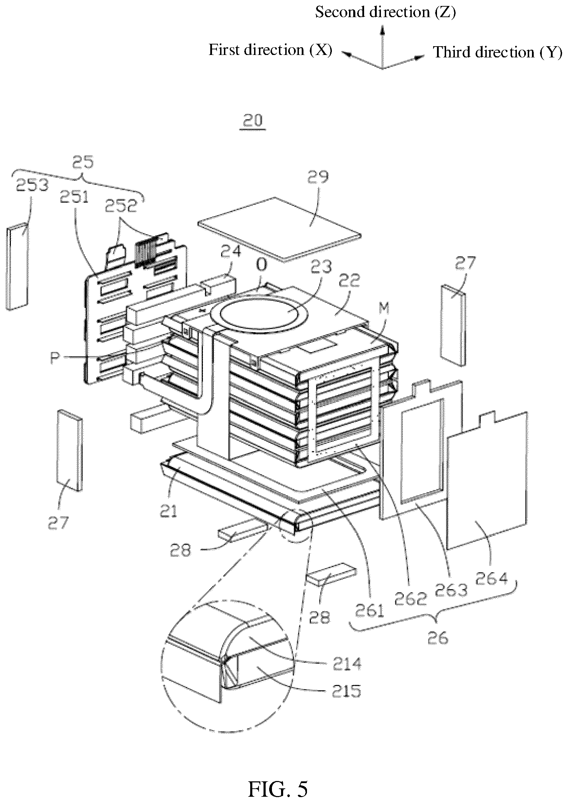

Referring to FIG. 4 and FIG. 5, the cell module 20 includes a plurality of stacked cells 21, a bracket 22, and a detection piece 23. The plurality of cells 21 are stacked along a second direction. In this embodiment, the second direction is the Z-axis direction. In this embodiment, the second direction is a thickness direction of the cell 21. The bracket 22 is disposed above the cell 21. In this embodiment, the bracket 22 is disposed above the cell 21 close to the cover plate 10. Further, the cell 21 close to the cover plate 10 is defined as a first cell M, and the bracket 22 is located between the cover plate 10 and the first cell M. The detection piece 23 is disposed on the bracket 22. Further, the detection piece 23 is disposed between the cover plate 10 and the bracket 22, and is configured to detect the expansion degree of the cell module 20. When the expansion degree of the cell module 20 is greater than an expansion degree threshold, the detection piece 23 can detect the expansion status, thereby improving the safety of the battery pack 100.

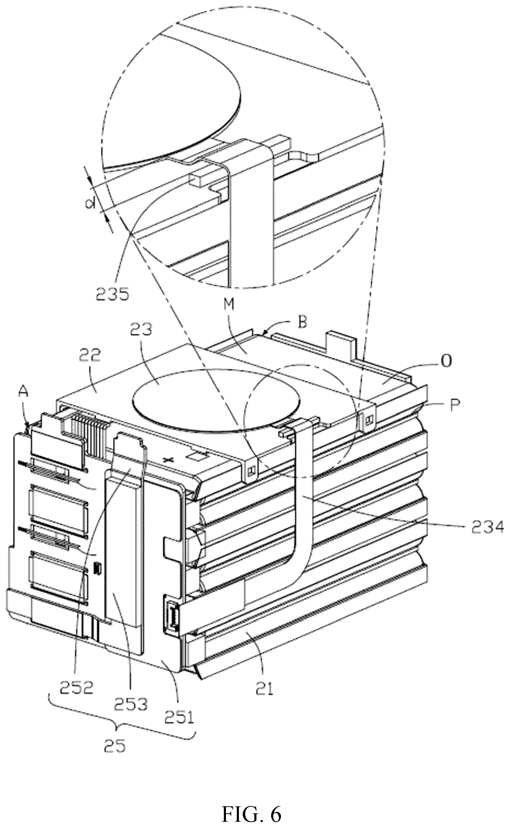

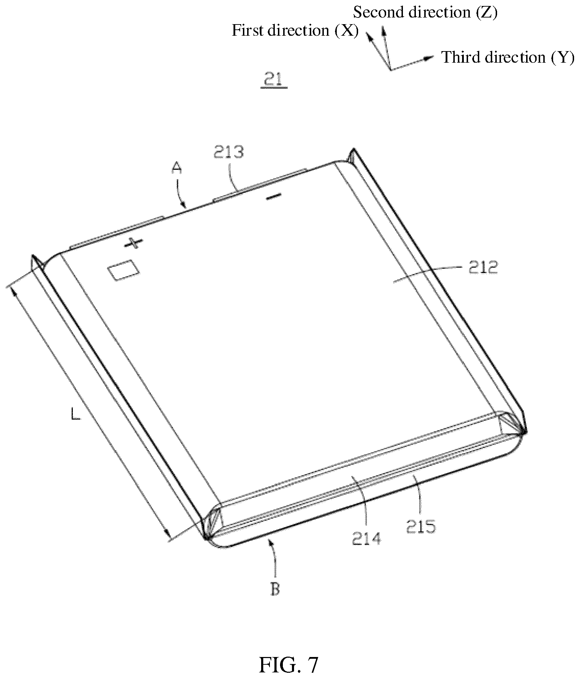

Referring to FIG. 6, FIG. 7, and FIG. 8, specifically, the cell 21 includes an electrode assembly 211, a cell housing 212, and a metal portion 213. The cell housing 212 contains an accommodation portion 2121. The electrode assembly 211 is accommodated in the accommodation portion 2121 of the cell housing 212. The metal portion 213 is connected to the electrode assembly 211, and extends out of the cell housing 212. Along the second direction, the first cell M includes a first face O and a second face P disposed opposite to each other.

The cell housing 212 may include an insulation layer, a metal layer, and a bonding layer. The cell housing 212 is bonded onto the electrode assembly 211 by the bonding layer, so as to implement connection to the electrode assembly 211. The metal layer is located between the insulation layer and the bonding layer, and can increase the strength of the cell housing 212. The insulation layer facing away from the electrode assembly 211, and can prevent external moisture from penetrating into the interior of the electrode assembly. The metal portion 213 is configured to be connected to an external structure so that the cell 21 can communicate with the external structure. Moreover, the metal portions 213 of two adjacent cells 21 are interconnected to implement electrical communication between a plurality of cells 21. In this embodiment, the metal portion 213 is a tab. Tabs are classed into a positive tab and a negative tab. The positive tab and the negative tab of a cell 21 are connected to the positive tab and the negative tab of an adjacent cell respectively.

The cells 21 are disposed along a first direction, and the metal portion 213 extends out of the cell housing 212 along the first direction.

Along the first direction, the cell 21 includes a first end A and a second end B disposed opposite to each other. The first end A is an end from which the metal portion 213 extends out, and the second end B is an end facing away from the metal portion 213. In this embodiment, there are metal portions 213. The two metal portions 213 extend out of the cell housing 212 from the first end A of the cell 21. In other embodiments, one of the two metal portions 213 may be extended out of cell housing 212 from the first end A of the cell 21; and the other metal portion 213 may extend out of the cell housing 212 from the second end B of the cell 21. In this embodiment, at the second end B, the cell 21 includes a first surface 214 and a second surface 215. The first surface 214 and the second surface 215 are not on the same plane. Along the first direction, the first surface 214 is closer to the first end A than the second surface 215. In an embodiment, the second surface 215 may be used as a reference for disposing another component in the cell module 20 so that the overall structure of the cell module 20 is flatter and more even and makes it convenient to fit the cell module 20 into the battery pack housing 40.

Referring to FIG. 4, FIG. 5, and FIG. 9, the bracket 22 is disposed on top of the first cell M. The bracket 22 includes a main body 221. The main body 221 is roughly a rectangular plate structure. Along the third direction, the main body 221 extends by a distance approximately identical to the extension distance of the cell 21. In this embodiment, the third direction is the Y-axis direction. The term "approximately" or "roughly" used herein does not mean being absolutely equal, but means a possible deviation of +/-5 mm to +/-10 mm between the two items listed. In an embodiment, a first clearance (not shown in the drawing) exists between the main body 221 and the first cell M. In potting the battery pack housing 40, the second resin layer 30 flows into the first clearance to strengthen the fixing strength between the main body 221 and the first cell M.

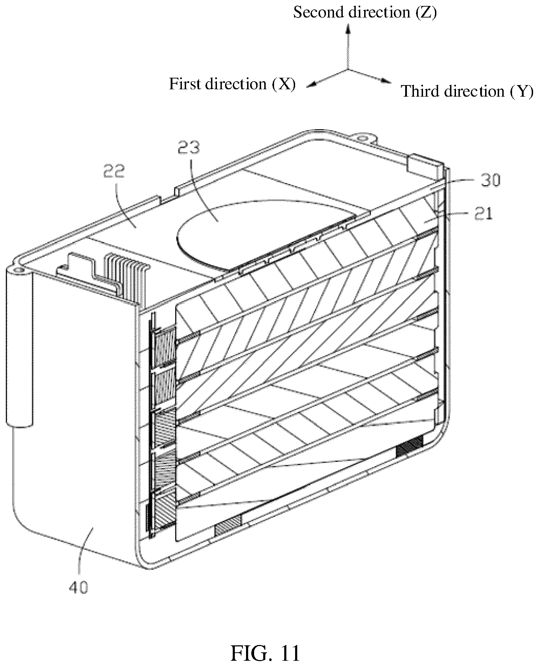

In an embodiment, the bracket 22 further includes a plurality of protruding portions 222. The plurality of protruding portions 222 are arranged apart on a side of the main body 221, the side being close to the first cell M. In addition, the protruding portion 222 extends toward the first cell M by a first distance. In this way, the protruding portion 222 extends beyond the main body 221, and the protruding portion 222 and the main body 221 form a groove 223. The groove 223 communicates with the first clearance. The strength of the main body 221 can be increased by disposing the protruding portion 222. In addition, referring to FIG. 11, when the cell module 20 is disposed in the battery pack housing 40, the second resin layer 30 can be disposed between the main body 221 and the cell 21. A second resin layer 30 is disposed at the groove 223 so that the stability between the bracket 22 and the cell 21 is higher.

In an embodiment, the bracket 22 further includes a fixing portion 224. Along the third direction, the fixing portion 224 is connected to a lateral edge of the main body 221. In an embodiment, there are two fixing portions 224. The two fixing portions 224 are connected to two opposite lateral edges of the main body 221. In this embodiment, the fixing portion 224 is disposed perpendicular to the main body 221. In other embodiments, the fixing portion 224 may be disposed at another angle to the main body 221. The bracket 22 is fixed in the battery pack housing 40 by the fixing portion 224, so as to pre-position the bracket 22 and reduce displacement of the bracket 22 caused by the flow of the second resin layer 30 during potting for the cell module 20. In an embodiment, a fixing hole 225 is provided on the fixing portion 224. The fixing portion 224 is buckled to the inner wall of the battery pack housing 40 by the fixing hole 225 to implement the pre-positioning of the bracket 22.

The fixing portion 224 is snap-connected to the battery pack housing 40. Therefore, when the cell 21 expands, it is more convenient to drive the bracket 22 to move. When the second resin layer 30 serves to fix the cell module 20, the amount of the second resin layer 30 at the fixing hole 225 is relatively small, the fixing degree is relatively low, and the movement of the bracket 22 is not affected.

Understandably, in other embodiments, the number and location of the fixing portions 224 are not limited to the examples given here. For example, the number of fixing portions 224 may be set to six, eight, or the like. The shape of the main body 221 is not limited the example given here.

In an embodiment, the cell module 20 includes a bracket 22. The bracket 22 is disposed above the first cell M along the second direction. The first face O of the first cell M may be uneven. With the bracket 22 disposed, by disposing the detection piece 23 on the bracket 22, the detection piece 23 is located on a flat and even surface, thereby increasing the detection accuracy of the detection piece 23.

Understandably, in other embodiments, the bracket 22 may be disposed between two adjacent cells 21 instead, without being limited to the location above the first cell M.

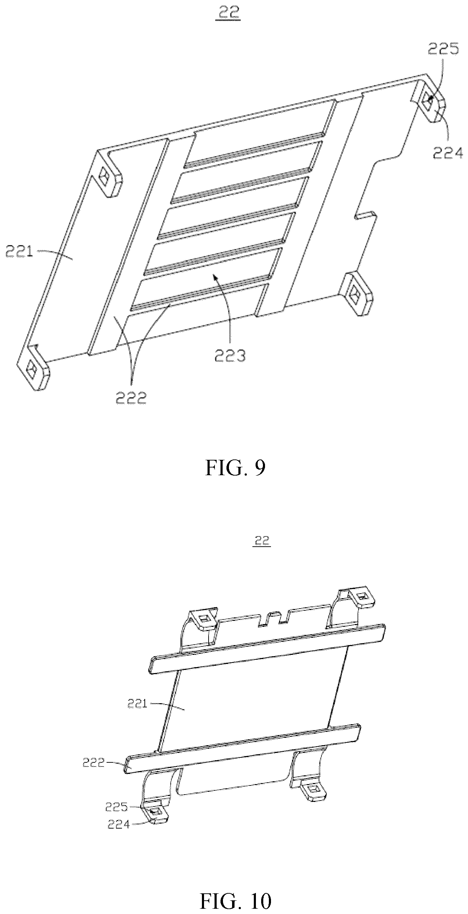

Referring to FIG. 10, in another embodiment, a bracket 22 is further provided. The bracket 22 includes a main body 221, a protruding portion 222, and a fixing portion 224. The protruding portion 222 is disposed on a surface of the main body 221, the surface being close to the first cell M. In this way, a first clearance exists between the main body 221 and the first cell M, and the second resin layer 30 can be disposed between the main body 221 and the first cell M. The structure of the fixing portion 224 is the same as the structure of the fixing portion 224 described in the preceding embodiment, and details are omitted here.

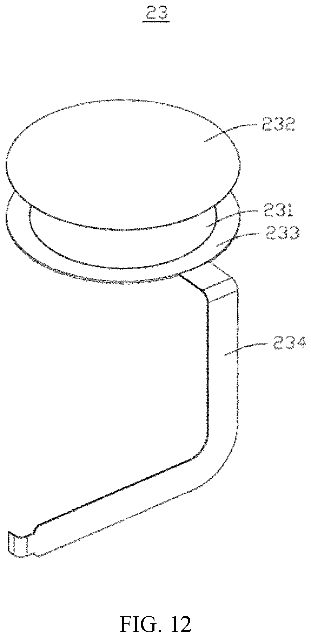

Referring to FIG. 4, FIG. 5, and FIG. 12, the detection piece 23 is configured to detect the expansion degree of the cell module 20, and transmit the detected information. The detection piece 23 includes a first detection portion 231, a second detection portion 232, and a lead wire 234. The first detection portion 231 is disposed on a surface of the bracket 22, the surface being close to the cover plate 10. The second detection portion 232 is disposed at the first detection portion 231. The lead wire 234 is connected to the first detection portion 231. When the first detection portion 231 is connected to the second detection portion 232, information is transmitted through the lead wire 234.

In an embodiment, the first detection portion 231 and the second detection portion 232 each include a thin film. A conductive silver paste is applied on the thin film. The conductive silver paste may be used as a conductive portion of the first detection portion 231 and the second detection portion 232.

The detection piece 23 further includes a first bonding region 233. The first bonding region 233 is disposed at a location close to the edge of the first detection portion 231. This location is coated with a structure such as glue or double-sided tape, so that the first detection portion 231 can be connected to the second detection portion 232 by the first bonding region 233. The first bonding region 233 is coated with glue so that a clearance such as a 0.2 mm clearance is formed between the first detection portion 231 and the second detection portion 232 in a region other than the first bonding region 233.

When the cell module 20 expands, the first cell M thrusts the second resin layer 30. The second resin layer 30 thrusts the bracket 22. The bracket 22 drives the first detection portion 231 to approach the second detection portion 232 until the two detection portions are connected together. The conductive silver paste on the first detection portion 231 is in contact with the conductive silver paste on the connected second detection portion 232 to form a conductive loop. The conductive loop is connected to an external structure through the lead wire 234 to send out the information about the conductive connection between the first detection portion 231 and the second detection portion 232.

In an embodiment, the cover plate 10 includes a raised portion 12. In order to make the detection effect of the detection piece 23 more accurate, the location of the raised portion 12 corresponds to the location of the detection piece 23. When the cell 21 expands, the raised portion 12 can abut against the second detection portion 232. Therefore, it is easier to implement connection between the first detection portion 231 and the second detection portion 232, thereby improving accuracy of the detection piece 23.

In this embodiment, when the first detection portion 231 is not connected to the second detection portion 232, the resistance of the lead wire 234 may be regarded as infinitely high. When the cell 21 expands abnormally, the expansion implements connection between the first detection portion 231 and the second detection portion 232 to form a complete loop, and the resistance of the lead wire 234 drops rapidly. In this way, the abnormal expansion can be responded to and detected in time, thereby enhancing the safety of the battery pack 100.

Understandably, in other embodiments, the detection form of the detection piece 23 is not limited to resistance detection. For example, another detection form may be a detection form that responds in time as soon as the first detection portion 231 is conductively connected to the second detection portion 232, or a detection form that serves equivalent functions or purposes.

In an embodiment, the detection piece 23 and the bracket 22 may be disposed between two adjacent cells 21.

In an embodiment, the expansion degree of the cell 21 can be set. For example, the expansion degree of the cell 21 greater than 15% is used as a threshold. Understandably, a higher expansion threshold may be used instead so as to reduce the probability of false triggering during use of the battery pack 100. In a specific embodiment, the normal expansion degree of the cell 21 is 0% to 20%. A clearance exists between the first detection portion 231 and the second detection portion 232, and allows the cell 21 to expand further. In an implementation, the clearance allows the cell 21 to expand further by 5%. When the cell 21 expands by a percentage up to 20%, the first detection portion 231 and the second detection portion are conductively connected.

Referring to FIG. 6, in an embodiment, the detection piece further includes a supporting portion 235. When the cell module 20 expands, the first detection portion 231 and the second detection portion 232 move along the second direction, and the movement makes the lead wire 234 be pulled. Because the lead wire 234 is fixed by the second resin layer 30, the lead wire 234 may be snapped off during the movement of the first detection portion 231 and the second detection portion 232. To reduce the probability of the snap-off, a supporting portion 235 is disposed on a side of the lead wire 234, the side being close to the bracket 22. The supporting portion 235 is located between the lead wire 234 and the bracket 22 to increase the height of the lead wire 234 along the second direction. In this way, the lead wire 234 is raised to a higher level. When the cell module 20 expands, the first detection portion 231 and the second detection portion 232 move, and the lead wire 234 moves together, thereby reducing the probability of snapping off the lead wire 234. In an embodiment, the supporting portion 235 is at a first distance d from the first detection portion 231 and the second detection portion 232 along the third direction. In this way, the first detection portion 231 and the second detection portion 232 are made more even. When abnormal expansion of a cell 21 is detected, the cell module 20 disconnects the electrical conduction between the cells 21 to reduce continued use of the cell 21. This also makes the cell module 20 to fuse off after the detection piece 23 is conductively connected, so as to form an open circuit of the battery pack 100 and stop further use of the battery pack.

Referring to FIG. 6, in an embodiment, in order to enable the detection piece 23 to detect the expansion status of the cell 21 more easily, the detection piece 23 is disposed close to a second end B of the cell 21. In a specific implementation, along the first direction X, a distance from the second end B to a first end A is L, and the detection piece 23 may be disposed at a distance of 1/4L to 1/3L from the second end B along the first direction X. The location of the bracket 22 on the first cell M may be adjusted depending on the location of the detection piece 23. A metal portion 213 is disposed at the first end A of the cell 21. The metal portion 213 needs to be connected to an external structure to implement electrical conduction of the cell 21. The second end B is not connected to any external structure.

The second resin layer 30 fixes the cell module 20 in the battery pack housing 40. The metal portion 213 is connected to the external structure. The first end A is fixed by the second resin layer 30. The amount of the second resin layer 30 disposed at the second end B is smaller than the amount of the second resin layer 30 disposed at the first end A. In this way, the bonding strength of the second end B is weaker than that of the first end A, and the mechanical strength of the first end A is greater than that of the second end B. Therefore, the second end B is more expansible than the first end A. To reduce the probability of wobbling of the second end B due to the smaller amount of the second resin layer at the second end B, an insulation assembly 26 may be disposed at the second end B to alleviate the wobbling of the second end B.

The surface of the cell module 20 is coated with the second resin layer 30. To make it easier to detect whether the cell module 20 expands, the location of the second end B is incompletely filled with the second resin layer so that the second end B is more movable. It is easier to detect the expansion degree of the cell module 20 by disposing the detection piece 23 close to the second end B.

In an embodiment, when the second resin layer 30 serves to fix the cell module 20, the second resin layer 30 is disposed between the bracket 22 and the first cell M. Further, the second resin layer 30 may be disposed on a surface of the bracket 22, the surface being away from the first cell M. The first face O of the first cell M is fully coated with the second resin layer 30. In this way, when the bracket 22 is thrust by the second resin layer 30 during the expansion of the cell 21, the bracket 22 is stressed more uniformly on the whole, the thrust force is also transmitted more uniformly, and the detection piece 23 can perform detection more accurately.

The second resin layer 30 serves to fix the bracket 22, and the detection piece 23 needs to be exposed outside the second resin layer 30 to reduce the extent by which the second resin layer 30 fixes the detection piece 23, and make the first detection portion 231 and the second detection portion 232 of the detection piece 23 immovable.

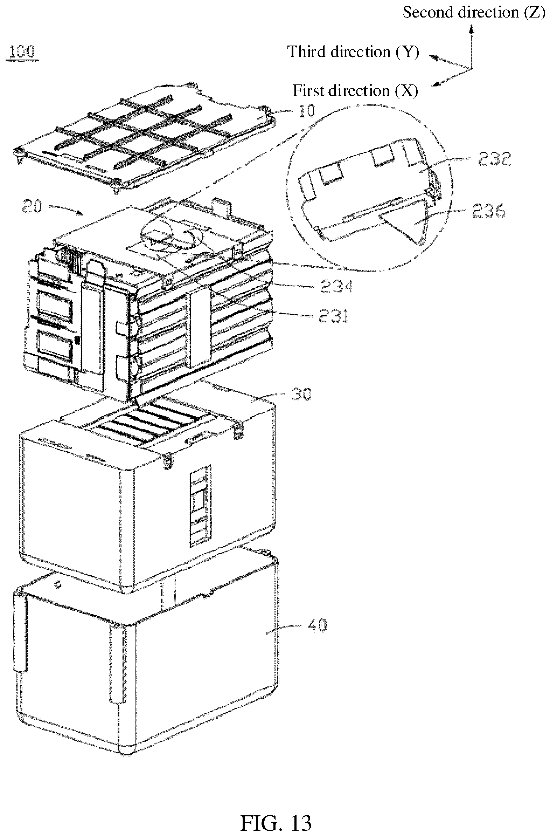

Referring to FIG. 13, another embodiment of this application further provides a detection piece 23. In this embodiment, the detection piece 23 includes a first detection portion 231, a second detection portion 232, and a connecting portion 236. When the first detection portion 231 is disposed on the bracket 22, the first detection portion 231 is disposed on a surface of the bracket 22, the surface being close to the cover plate 10. The second detection portion 232 is disposed on a surface of the cover plate 10, the surface being close to the cell 21. When the cell module 20 is not equipped with the bracket 22, the first detection portion 231 is disposed on a surface of the first cell M, the surface being close to the cover plate 10. The second detection portion 232 is disposed on a surface of the cover plate 10, the surface being close to the first cell M. The second detection portion 232 is equipped with a connecting portion 236. The connecting portion 236 extends out from the second detection portion 232 toward the first detection portion 231. The connecting portion 236 can move relative to the second detecting portion 232, and can be electrically connected to the second detecting portion 232. A lead wire 234 is disposed on the second detection portion 232, and information is transmitted through the lead wire 234.

When the cell 21 is not expanded under normal conditions, a clearance exists between the first detection portion 231 and the second detection portion 232. When the cell 21 expands abnormally, the cell 21 props the first detection portion 231, or props the connecting portion 236 on the first detection portion 231 and the second detection portion 232 through the support 22 to implement connection. After the first detection portion 231 is connected to the connecting portion 236, the first detection portion 231 thrusts the connecting portion 236 to move. In this way, the connecting portion 236 is conductively connected to the second detection portion 232, and an electrical conduction state is formed inside the second detection portion 232. The conduction information is sent out through the lead wire 234 to implement detection.

In this embodiment, the first detection portion 231 is an insulation strip, and the second detection portion 232 is a travel switch. The connection portion 236 is a contact head on the travel switch.

Understandably, the form of the detection piece 23 is not limited to the film detection or the travel switch detection. In another embodiment, the detection piece 23 may be in the form of a metal sheet instead, for example.

Referring to FIG. 4 and FIG. 5, in an embodiment, the cell module 20 further includes a supporting piece 24. The supporting piece 24 is disposed at a junction between the metal portions 213 of two adjacent cells 21. Specifically, after the metal portions 213 of two adjacent cells 21 are connected, an accommodation trough (not shown in the drawing) is formed between the metal portions 213. The supporting piece 24 is disposed in the accommodation trough. The supporting piece 24 disposed in the accommodation trough can support and fix the metal portion 213. In addition, the supporting piece 24 can space out the unconnected metal portions 213 between two adjacent cells 21 to reduce the probability of short circuits between the cells 21 in a case of contact between the metal portions.

In an embodiment, the supporting piece 24 is foam. Understandably, in some other embodiments, the supporting piece 24 may be replaced by another structure serving equivalent functions or purposes.

Referring to FIG. 4 and FIG. 5, in an embodiment, the cell module 20 further includes an adapter assembly 25. The adapter assembly 25 is disposed at a first end A of the cell 21, and is configured to be connected to the metal portion 213 and the lead wire 234. In this way, the metal portion 213 and the lead wire 234 can be connected to an external structure to monitor the data such as an internal voltage of the cell 21, and, upon receiving the information transmitted by the lead wire 234, actuate a protection mechanism for the cell 21.

The adapter assembly 25 includes an adapter plate 251, an adapter piece 252, and a position limiter 253. The adapter plate 251 is disposed at the first end A of the cell 21. Viewed along the third direction, after extending out from the first detection portion 231, the lead wire 234 extends toward the adapter plate 251 along the lateral edge of the cell 21, and is electrically connected to the adapter plate 251. The "lateral edge" of the cell 21 means a position near the edge between the first end A and the second end B of the cell 21. The adapter piece 252 is disposed on the adapter plate 251 and is electrically connected to the adapter plate 251. The position limiter 253 is configured to limit the position of the adapter piece 252 on the adapter plate 251 to reduce the movement of the adapter piece 252.

In an embodiment, the adapter plate 251 is a circuit board. In an embodiment, the adapter piece 252 is a copper bar. Further, the copper bar may be divided into a main positive copper bar and a main negative copper bar. The main positive copper bar is connected to a positive tab of a cell 21 located facing away from the cover plate 10, and the main negative copper bar is connected to a negative tab of the cell 21 close to the cover plate 10. The position limiter 253 is configured to limit the position of the main positive copper bar. In an embodiment, the position limiter 253 is a limiting foam.

Understandably, in some other embodiments, the connection between the main positive copper bar or the main negative copper bar and the positive tab or the negative tab of the cell 21 may be replaced. The position limiter 253 may be replaced by another structure serving equivalent functions or purposes.

Referring to FIG. 4 and FIG. 5, in an embodiment, in order to reduce the amount of the second resin layer 30 poured into the battery pack housing 40, an insulation assembly 26 may be disposed at the second end B of the cell 21. By disposing the insulation assembly, on the one hand, the second end B of the cell 21 is caused to be easily movable, and in turn, the accuracy of detecting the expansion degree of the cell module 20 is improved; and, on the other hand, the cost of the battery pack 100 is reduced. The insulation assembly 26 and the second ends B of the cells 21 form a first space 265. The first space 265 communicates with a clearance between at least two cells 21. The insulation assembly 26 closes off one side of the first space 265, and the one side of the first space 265 facing away from the cells 21 along a direction opposite to the first direction. The insulation assembly 26 and the first space 265 form an exhaust passage. The exhaust passage communicates with the external atmosphere of the battery pack 100.

The battery pack 100 includes a first resin layer 262. The first resin layer 262 is disposed at the second end B of the cell 21. The first resin layer 262 is in a hollow rectangular shape. When the first resin layer is disposed on the cell 21, the amount of the second resin layer 30 entering the hollow part can be reduced. The insulation assembly 26 is disposed on the surface of the first resin layer 262 to close off the hollow part of the first resin layer 262. Such arrangement reduces the dosage of the first resin layer 262, thereby reducing the dosage of the second resin layer 30, and in turn, reducing the cost of the battery pack 100 while fixing the cell module 20.

In an embodiment, when the battery pack 100 is in a harsh environment such as a high-temperature environment, the internal gas pressure is different from the external gas pressure of the battery pack 100 and thereby causes safety hazards. In this case, the cell module 20 may exhaust the gas through the insulation assembly 26. For example, the gas generated by the cell 21 or the gas generated by other structures in the battery pack 100 may be exhausted by using the insulation assembly 26.

An exhaust passage is formed between the first resin layer 262 and the insulation assembly 26. The exhaust passage communicates with the outside of the battery pack 100 to exhaust gas from the internal structure of the battery pack 100.

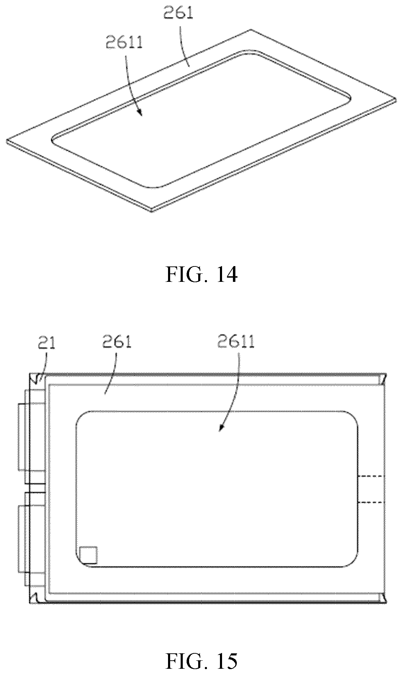

Referring to FIG. 4 and 14, the battery pack 100 includes a first insulator 261. The first insulator 261 is disposed between two adjacent cells 21. Two opposite surfaces of the first insulator 261 are coated with double-sided tape, for example, so that the first insulator 261 can be bonded to the surface of the cell 21. In this way, every two adjacent cells 21 can be fixed to each other to form a stable cell module 20. The first space 265 is formed at least between each of the two adjacent cells 21 and the insulation assembly 26. In an embodiment, the first insulator 261 is foam. With the foam disposed between the two adjacent cells 21, when a cell 21 expands, the foam can provide a deformation space for the cell 21, thereby alleviating the direct mutual squeezing between two adjacent cells 21 or the mutual squeezing between the cell 21 and the cover plate 10 or the battery pack housing 40, and preventing the resultant rupture of the cover plate 10 or the battery pack housing 40.

Understandably, in some other embodiments, the first insulator 261 may be replaced by another structure serving equivalent functions or purposes. The double-sided tape may be replaced with another form of adhesive such as a liquid glue.

A second through-hole 2611 may be provided on the first insulator 261. In an embodiment, the second through-hole 2611 is roughly rectangular, so that the shape of the second through-hole 2611 is roughly the same as the shape of the cell 21 and more adaptable to the cell 21. With the second through-hole 2611 provided on the first insulator 261, the position at the second through-hole 2611 on the cell 21 provides a larger space to allow for expansion. For example, the space provided by the second through-hole 2611 may be provided for the cell 21 to expand. In addition, the creation of the second through-hole can also reduce the dosage of the first insulator 261 and reduce the cost of the battery pack 100.

In an embodiment, a fragile point of the cell 21 is located on a first face O or a second face P. The "fragile point" here means a position that is more prone to be burst in the battery cell 21.

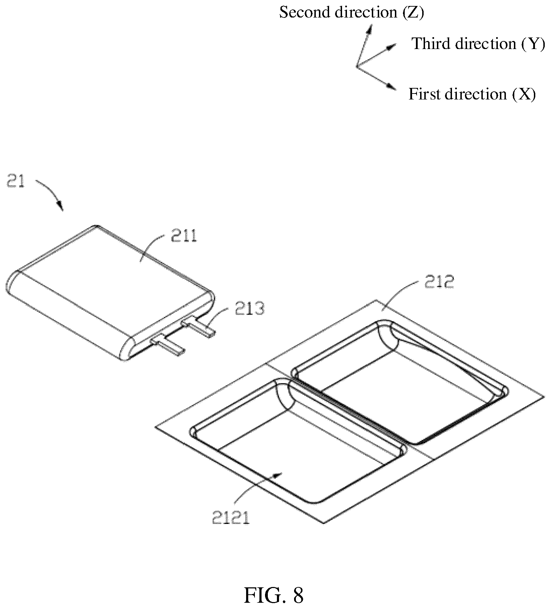

Referring to FIG. 8 and FIG. 15, in an embodiment, viewed along a direction opposite to the second direction, a maximum projected area of the first insulator 261 on the cell 21 is the area of the electrode assembly 211, and a minimum projected area of the first insulator on the cell is the area of the cell housing 212. In an embodiment, the projected area of the first insulator 261 on the cell 21 is set to be between the maximum projected area and the minimum projected area. With the dimensions of the first insulator 261 falling within the above range, the probability of inability to compress the first insulator 261 is reduced when the second resin layer 30 enters the clearance between two adjacent cells 21 from the lateral edge of the cell 21 in a process of filling the stacked cells 21 with the second resin layer 30 on the one hand. On the other hand, such dimensions make it easier to fit the cell module 20 into the battery pack housing 40, thereby reducing the probability of difficult assembling.

In an embodiment, in order to facilitate the first insulator 261 to exhaust gas of the cell 21, no double-sided tape is coated on a part of the first insulator 261, the part being close to the second end B of the cell 21. In this way, this part of the first insulator 261 is not bonded to the cell 21, so that the gas can pass through the clearance between the first insulator 261 and the cell 21. Specifically, the dashed line in FIG. 15 shows the part, uncoated with the double-sided tape, of the first insulator 261.

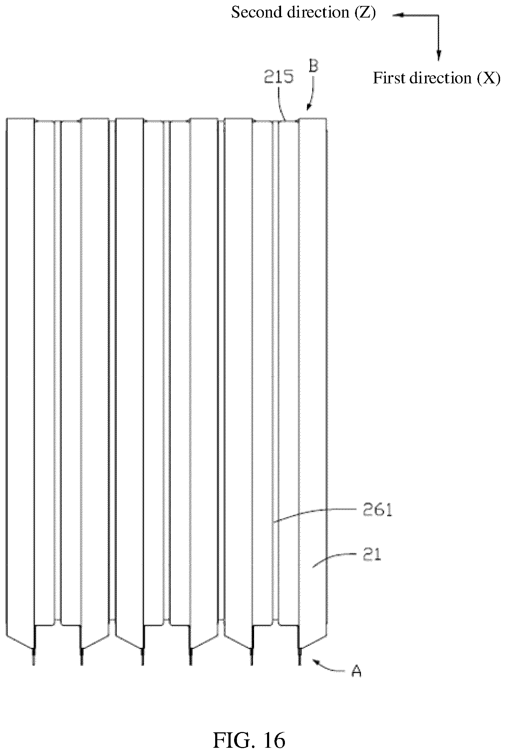

Referring to FIG. 16, a first insulator 261 is disposed between the stacked cells 21. Viewed along a direction opposite to the first direction, the end of the first insulator 261 is flush with the first surface 214 at the second end B of the cell 21. The arrangement that makes the end of the first insulator 261 flush with the second surface 215 can effectively reduce the amount of the second resin layer 30 entering the clearance between the cells 21, and in turn, reduce the interference caused to the normal expansion of the cell 21, and further, facilitate the assembling between the cell 21 and the battery pack housing 40.

In an embodiment, the Shore hardness C of the first insulator 261 falls within 38°±5°. With the hardness of the first insulator 261 falling within such a range, the compression of the first insulator 261 is facilitated on the one hand, and the probability of inability to compress the first insulator 261 is reduced due to excessive hardness of the first insulator 261 when the cell 21 compresses the first insulator 261. On the other hand, the dimensions of the stacked cells 21 and the first insulator 261 can be controlled more easily, and the probability of deformation caused by deficient hardness of the first insulator 261 is reduced.

In an embodiment, the first insulator 261 is made of an elastic closed-cell material. This material makes the first insulator 261 deformable and provides a deformation space for the expansion of the cell 21. In addition, the material prevents seepage of glue, thereby effectively preventing the second resin layer 30 from entering the clearance between two adjacent cells 21.

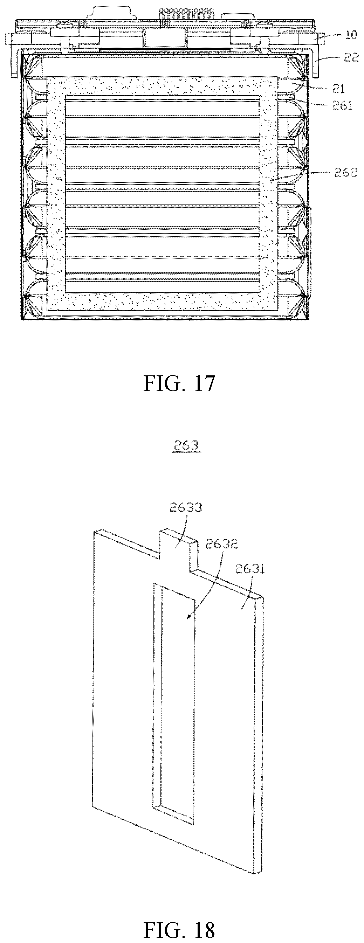

Referring to FIG. 17, a first resin layer 262 is disposed at the second end B of the stacked cells 21. In this embodiment, viewed along the first direction, the first resin layer 262 is roughly in the shape of a hollow rectangle. The first resin layer 262 is formed by applying and fixing a liquid resin onto the second end B of the cells 21. Referring to FIG. 16, at the second end B of the cell 21, the first surface 214 and the second surface 215 are at different distances from the first end A. By applying the first resin layer 262, a slot (not shown in the drawing) between the first surface 214 and the second surface 215 is filled to reduce the probability of the flow of the second resin layer 30 to the first surface 214 and the second surface 215 during subsequent potting, and in turn, reduce the interference caused to the exhausting of gas from the cell module 20.

Understandably, designing the first resin layer 262 as a hollow rectangular shape is based on the shape of the stacked cells 21. Understandably, in some other embodiments, when the stacked cells 21 are in another stacked shape instead, the shape of the first resin layer 262 also changes accordingly.

Referring to FIG. 5 and FIG. 18, in order to further reduce the pouring of the second resin layer 30, the insulation assembly 26 includes a second insulator 263 and a third insulator 264. The second insulator 263 is disposed on a surface of the first resin layer 262. Viewed along the first direction, the second insulator 263 covers the first resin layer 262. A bonding structure (not shown in the drawing) such as double-sided tape is disposed on a surface of the second insulator 263, the surface being close to the first resin layer 262. In this way, the second insulator 263 can be bonded to the cell 21 by the double-sided tape.

The second insulator 263 includes a first body 2631. The first body 2631 is also roughly rectangular. A third through-hole 2632 is provided on the first body 2631. The third through-hole 2632 is rectangular. The length direction of the third through-hole is the second direction. In this way, the third through-hole 2632 can be in clearance communication with the clearance between each of the plurality of cells 21 and the first insulator 261 to exhaust gas.

In an embodiment, the second insulator 263 further includes a first portion 2633. The first portion 2633 extends out from the first body 2631 along the second direction. When the cell module 20 is assembled with the cover plate 10, the first portion 2633 is at least partially located at the first through-hole 14 of the cover plate 10.

In an embodiment, the second insulator 263 is foam. Understandably, in some other embodiments, the second insulator 263 may be replaced by another structure serving equivalent functions or purposes. The shape of the second insulator 263 is not limited the example given here. The shape of the second insulator 263 may vary depending on the stacked shape of the cells 21.

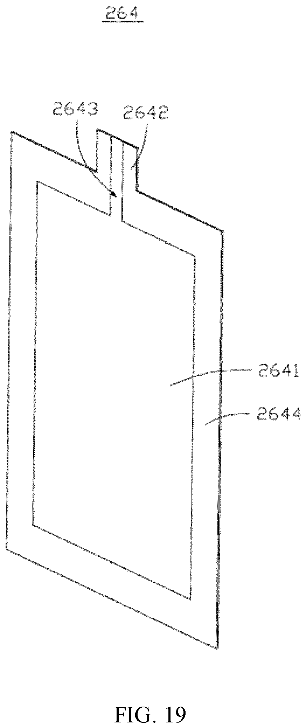

Referring to FIG. 5 and FIG. 19, the third insulator 264 is disposed on a surface of the second insulator 263, the surface being facing away from the first resin layer 262. The structure of the third insulator 264 is roughly identical to the structure of the second insulator 263.

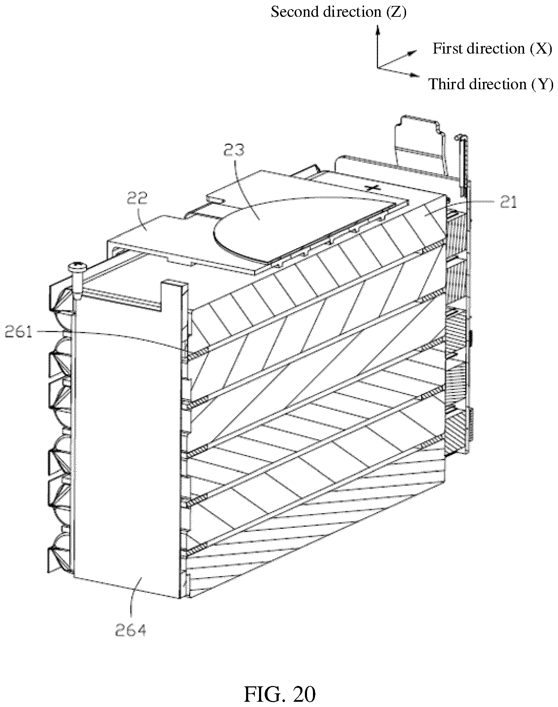

Also referring to FIG. 20, the third insulator 264 includes a second body 2641 and a second portion 2642. The second portion 2642 extends out from the second body 2641 along the second direction. The second body 2641 correspond to the first body 2631, and the second portion 2642 correspond to the first portion 2633. The first portion 2633 can serve to support and fix the second portion 2642. An exhaust slot 2643 is provided on the second body 2641 and the second portion 2642. When the third insulator 264 is connected to the second insulator 263, the exhaust slot 2643 communicates with the second through-hole 2611 to form an exhaust passage. The gas is exhausted out of the battery pack from the exhaust slot 2643.

In an embodiment, when the cover plate 10 is assembled with the cell module 20, the distance by which the first portion 2633 and the second portion 2642 go beyond the cover plate 10 along the second direction is greater than 2 mm, so as to reduce the probability of inability to exhaust gas and relieve pressure caused by entry of the second resin layer 30 into the exhaust passage. The depth by which the exhaust slot 2643 is recessed along a direction opposite to the first direction is less than or equal to 0.2 mm. The length of the exhaust slot 2643 along the third direction is 1 mm to 3 mm. With the dimensions of the exhaust slot 2643 falling within such ranges, the exhaust slot 2643 can play a role of dust prevention, and reduce the probability that dust and other impurities block the exhaust passage.

A second bonding region 2644 is disposed on the second body 2641. The second bonding region 2644 is located at the edge of the second body 2641. The third insulator 264 is connected to the second insulator 263 by a bonding structure (not shown in the drawing) such as double-sided tape disposed in the second bonding region 2644.

In an embodiment, the third insulator 264 may be made of a polycarbonate (PC) material. Understandably, the third insulator 264 may be made of a material not limited to the example given here. In another embodiment, the material may be replaced by another material serving equivalent functions or purposes.

Understandably, in another embodiment, the second insulator 263 and the third insulator 264 may be a one-piece formed structure. An exhaust slot 2643 is provided between the second insulator and the third insulator, and the exhaust slot 2643 is caused to communicate with the third through-hole 2632.

When the insulation assembly 26 is disposed on the stacked cells 21, the cells 21 and the first insulator 261 are spaced out and stacked first, and then the first resin layer 262 is disposed at the second end B of the stacked cells 21 until the first resin layer 262 is solidified and fixed onto the second end B of the cells 21. Subsequently, the second insulator 263 is disposed on the first resin layer 262. Finally, the third insulator 264 is disposed on the second insulator 263 to complete the assembling between the insulation assembly 26 and the cells 21.

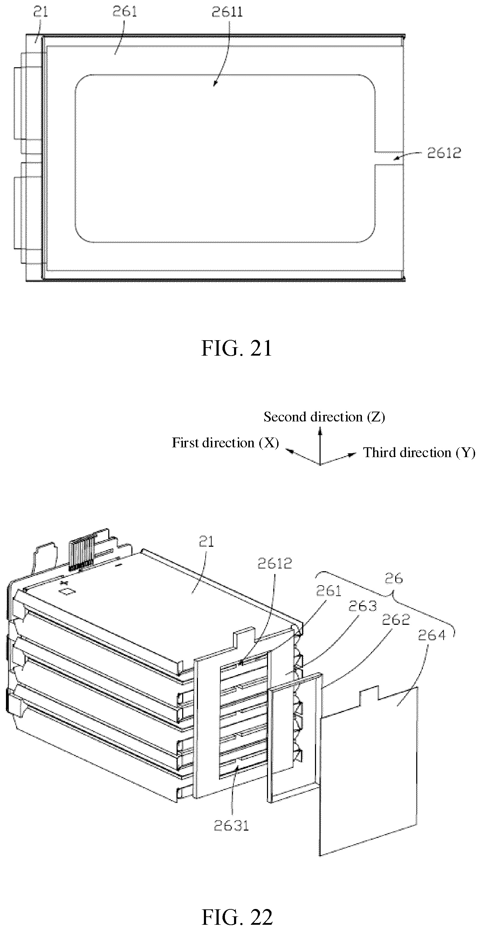

Referring to FIG. 21 and FIG. 22, in another embodiment, near the second end B of the cell 21, an opening 2612 is provided on the first insulator 261, and then the first insulator 261 is bonded to the surface of the cell 21.

Subsequently, the second insulator 263 is bonded to the second end B of the cell 21 to implement communication between the opening 2612 and the third through-hole 2632, that is, communication between the opening 2612 and the first space 265. Next, the first resin layer 262 is disposed along the edge of the third through-hole 2632. In this embodiment, the first resin layer 262 is approximately a frame structure. The term "approximately" indicates a relatively similar structure. In fact, the first resin layer 262 with a specified thickness is disposed at the edge of the third through-hole 2632, thereby reducing the probability of the flow of the second resin layer 30 into the third through-hole 2632 to hinder the exhausting of gas. Finally, the third insulator 264 is disposed on the second insulator 263. The exhaust slot 2643 communicates with the third through-hole 2632 to form a complete exhaust passage, thereby facilitating exhausting of gas out of the cell module 20.

Further, when the first insulator 261 is foam, the foam and the double-sided tape disposed on the foam decompose and generate gas in a high-temperature environment. The second through-hole 2611 disposed on the first insulator 261 reduces the dosage of the first insulator 261 and also reduces the gas generated. The gas generated by the foam and the double-sided tap on the foam is also exhausted through the exhaust passage.

Referring to FIG. 4 and FIG. 5, in an embodiment, the battery pack 100 further includes a cushion 27. The cushion 27 is disposed on a lateral edge of the cell module 20 along the third direction. In an embodiment, the cushion 27 is disposed on the lead wire 234 and located on a lateral edge of the cell module 20. By disposing the cushion 27 on the lead wire 234, the cushion 27 can serve to fix the lead wire 234, and reduce the movement of the lead wire 234 caused by the expansion of the cell 21, where the movement affects the accuracy of the information transmitted by the lead wire 234. In addition, the cushion can serve to buffer the cell module 20. When the battery pack 100 vibrates, the cushion 27 can reduce the probability of damage caused to the cell 21 by direct collision between the cell module 20 and the battery pack housing 40.

In an embodiment, the cushion 27 is foam. Understandably, in some other embodiments, the cushion 27 may be replaced by another structure serving equivalent functions or purposes.

Referring to FIG. 4, in an embodiment, the battery pack 100 further includes a rubber pad 28. The rubber pad 28 is disposed between the cell module 20 and the battery pack housing 40 along the second direction, and is configured to protect the cell 21 and reduce the probability of the cell 21 colliding with the battery pack housing 40 to cause deformation when the cell module 20 is fitted in the battery pack housing 40.

In an embodiment, the rubber pad 28 is a silicone pad 28. Understandably, in some other embodiments, the rubber pad 28 may be replaced by another structure serving equivalent functions or purposes. For example, foam is disposed to protect the cell 21.

Referring to FIG. 2, the battery pack 100 further includes a circuit board 29. The circuit board 29 is disposed on a surface of the cover plate 10, the surface being facing away from the cell module 20. The adapter piece 252 in the adapter assembly 25 is connected to the circuit board 29. The adapter plate 251 is connected to the circuit board 29 by wire connection or another connection means. In an embodiment, the circuit board 29 is a battery management system (BMS) board. The BMS board is configured to control data such as the voltage of the cell 21, and respond to the circuit of the cell 21 in time upon receiving the information transmitted by the lead wire 234, so as to ensure the safety of the cell 21.

Referring to FIG. 2, the second resin layer 30 is formed by being poured to the lateral edge of the cell 21 and then fixed, and is configured to fix a plurality of cells 21. After the electrode assembly 211 is packaged in the cell housing 212 to form the cell 21, a plurality of cells 21 are fixed by the second resin layer 30 at the lateral seal edge of the cell housing 212. In other words, the clearance between the lateral edges of two adjacent cells 21 is filled with the second resin layer 30, so that the two adjacent cells 21 are bonded and fixed to each other by the second resin layer 30. In an embodiment, the lateral edge of the cell 21 may be the periphery of the outer contour of the cell 21, so that the second resin layer 30 is firmer when fixing the cell 21. Further, in fitting the bracket 22 onto the cell module 20, the bracket is mounted before the second resin layer 30 is completely fixed.

The pouring method of the second resin layer 30 may be potting or injection molding, such as low-pressure injection molding. In this embodiment, the second resin layer 30 is a potting glue. The potting glue exerts effects such as bonding, sealing, potting, and coating protection for components. In an embodiment, the second resin layer 30 is an epoxy potting glue. Understandably, in another embodiment, the second resin layer 30 may be replaced by another type of potting glue.

Referring to FIG. 2 again, the battery pack housing 40 accommodates the cell module 20. The second resin layer 30 is disposed between the cell module 20 and the battery pack housing 40. For example, the second resin layer 30 is a potting glue. The potting glue is poured into the space between the cell module 20 and the battery pack housing 40 by pouring. The potting glue is fixed to form a solid-state second resin layer 30. The second resin layer 30 bonds and fixes the cell module 20 and the battery pack housing 40 together to increase the structural strength of the battery pack 100. The cover plate 10 is fixedly connected to the battery pack housing 40 by means such as a fastener. For example, the cover plate 10 is fitted onto the battery pack housing 40 by a screw to protect the cell module 20 in the battery pack housing 40.

The battery pack housing 40 assumes roughly a hollow cuboid structure without an upper cover, and includes four sidewalls 41 and a bottom wall 42. The four sidewalls 41 and the bottom wall 42 close in to form an accommodation space 43. The cell module 20 is disposed in the accommodation space 43. Further, the cover plate 10 and the battery pack housing 40 jointly encloses the cell module 20. The shape of the battery pack housing 40 is set based on the plurality of cells 21 stacked along the second direction. In an embodiment, the insulation assembly 26 is disposed between the second end B of the cell 21 and a sidewall 41 that is facing away from the metal portion 213.

Understandably, in another embodiment, the shape of the battery pack housing 40 is not limited to the example given here. For example, when the cell module 20 is circular, the shape of the battery pack housing 40 may vary depending on the shape of the cell module 20.

Understandably, in another embodiment, the method for fixing the cover plate 10 to the battery pack housing 40 is not limited to the example given here. For example, the fixing method may be a snap-fastening method instead. Alternatively, an adhesive may be applied at an edge of the cover plate 10, the edge corresponding to the battery pack housing 40. The cover plate is fixed to the battery pack housing by the adhesive.

An embodiment of this application further provides an electrical device (not shown in the drawings). The electrical device includes a body and the battery pack 100 according to any one of the embodiments described above. The battery pack 100 is disposed in the body. For example, the electrical device may be an electric vehicle, an electric bus, a battery electric vehicle, an energy storage device, an electric bicycle, an aircraft, or the like. Correspondingly, when the electrical device is an electric vehicle, the body is a vehicle body structure. The battery pack 100 is disposed in the vehicle body structure, and is configured to provide electrical power.

Understandably, in another embodiment, the electrical device may be a hand-held electrical device, such as a vacuum cleaner, a weeder, or the like.

To sum up, some embodiments of this application provide a battery pack 100 and an electrical device. By disposing a detection piece 23 on the cell 21 configured to detect whether the expansion degree of the cell module 20 exceeds an expansion threshold. When the expansion degree of the cell module 20 exceeds the expansion threshold, the detection piece 23 responds in time to protect the battery pack 100 and reduce safety hazards. In addition, an insulation assembly 26 is disposed on the cell module 20. The exhaust passage formed by the insulation assembly 26 communicates with the external atmosphere. In this way, the gas generated inside the battery pack 100 can be exhausted to the outside, thereby balancing the internal pressure and the external pressure of the battery pack 100, and solving the hazards caused by imbalance of the gas pressure.

In addition, a person of ordinary skill in the art understands that the foregoing some embodiments are merely intended to illustrate this application, but not intended to limit this application. All appropriate modifications and changes made to the some embodiments without departing from the spirit and conception of this application fall within the protection scope of this application.

## Claims

1. A battery pack, comprising a cover plate, a cell module, a second resin layer, and a battery pack housing wherein the cell module is accommodated in the battery pack housing and fixed by the second resin layer; the cover plate is fixed to the battery pack housing;
the cell module comprises a plurality of cells, each cell ( comprises a first end and a second end disposed opposite to each other along a first direction; the cell comprises a metal portion disposed at the first end; the plurality of cells are stacked along a second direction; and the first direction is perpendicular to the second direction;
wherein the battery pack further comprising:
an insulation assembly disposed at the second ends of at least two cells, wherein the insulation assembly and the second ends of the at least two cells form a first space; and the first space communicates with a clearance between the at least two cells; and
the insulation assembly closes off one side of the first space, the one side of the first space facing away from the cells along a direction opposite to the first direction, the insulation assembly and the first space form an exhaust passage, and the exhaust passage communicates with an outside of the battery pack.

2. The battery pack according to claim 1, further comprising a first resin layer, the first resin layer is disposed at the second ends of the at least two cells, and the first resin layer is bonded to the insulation assembly and the second ends of the at least two cells.

3. The battery pack according to claim 2, wherein the insulation assembly comprises a second insulator and a third insulator, the second insulator is disposed at the second ends of at least two cells, the second insulator comprises a third through-hole, the third through-hole communicates with a clearance between the at least two cells; the third insulator closes off one side of the third through-hole, and the one side of the third through-hole facing away from the cells along the direction opposite to the first direction.

4. The battery pack according to claim 3, wherein viewed along the first direction, the second insulator covers the first resin layer; a bonding structure is disposed on a surface of the second insulator, the surface being close to the first resin layer; and the second insulator is bonded to the cells by the bonding structure.

5. The battery pack according to claim 3, wherein the second insulator is bonded to the second ends of the cells, and the first resin layer is disposed at an edge of the third through-hole.

6. The battery pack according to claim 1, further a first insulator, and the first insulator is disposed between the at least two cells;
an opening is provided on the third insulator at a position close to the second end of the cell, and the opening communicates with the first space.

7. The battery pack according to claim 3, wherein the second insulator comprises a first body, and the third through-hole is provided on the first body.

8. The battery pack according to claim 3, wherein the cover plate comprises a first through-hole, the second insulator further comprises a first portion, and at least a part of the first portion is located in the first through-hole.

9. The battery pack according to claim 8, wherein the first portion extends beyond the cover plate through the first through-hole.

10. The battery pack according to claim 3, wherein the third insulator comprises an exhaust slot, and the exhaust slot communicates with the third through-hole.

11. The battery pack according to claim 8, wherein the third insulator comprises a second body and a second portion, the second body closes the third through-hole, the second portion is connected to the first portion, and at least a part of the second portion is located in the first through-hole.

12. The battery pack according to claim 11, wherein the second portion extends beyond the cover plate through the first through-hole.

13. The battery pack according to claim 8, wherein the third insulator comprises a second bonding region, the second bonding region comprises a bonding structure, and the third insulator is adhesively connected to the second insulator by the bonding structure.

14. The battery pack according to claim 8, wherein the second insulator and the third insulator are a one-piece formed structure, an exhaust slot is provided on the onepiece formed structure, and the exhaust slot communicates with the third through-hole.

15. The battery pack according to claim 6, wherein the first insulator comprises foam.

16. The battery pack according to claim 6, wherein a second through-hole is provided on the first insulator, and the second through-hole provides an expansion space for the cells.

17. The battery pack according to claim 6, wherein each of the cells comprises an electrode assembly, a cell housing, and a metal portion; the electrode assembly is accommodated in the cell housing; the metal portion is connected to the electrode assembly and extends out of the cell housing; viewed in a direction opposite to the second direction, a projected area of the first insulator on the cell is greater than or equal to a projected area of the electrode assembly.

18. The battery pack according to claim 17, wherein, viewed along a direction opposite to the second direction, the projected area of the first insulator on the cell is less than or equal to a projected area of the cell housing.

19. The battery pack according to claim 1, wherein the second resin layer comprises a potting glue, and the second resin layer adhesively fixes the cell module and the battery pack housing together.

20. The battery pack according to claim 2, wherein the first resin layer is formed by applying and fixing a liquid resin onto the second ends of the cells.

21. The battery pack according to claim 6, wherein a clearance exists between the first insulator and the second end of each cell.

22. The battery pack according to claim 1, wherein at least a part of the insulation assembly is disposed outside the second resin layer.

23. A method for manufacturing a battery pack, comprising the following steps:
disposing a plurality of cells in a battery pack housing, and disposing a first insulator between at least two cells, wherein a clearance exists between the at least two cells;
disposing an insulation assembly at second ends of the at least two cells, the insulation assembly and the second ends of the at least two cells form a first space, and the first space communicates with the clearance between the at least two cells;
the insulation assembly closes off one side of the first space, the one side of the first space facing away from the cell in a direction opposite to the first direction, the insulation assembly and the first space form an exhaust passage, and the exhaust passage communicates with an outside of the battery pack; and
pouring a second resin layer into the battery pack housing after the insulation assembly is disposed.

24. The method for manufacturing a battery pack according to claim 23, wherein the second resin layer is poured by potting or injection molding.

25. An electrical device, wherein the electrical device comprises a body and the battery pack according to any one of claims 1 to 22, and the battery pack is disposed in the body.
